# EUROPÄISCHE PATENTSCHRIFT

(11) **EP 1 104 545 B1**
(45) Veröffentlichungstag und Bekanntmachung des Hinweises auf die Patenterteilung: **16.02.2005**
(21) Anmeldenummer: 99952351.7
(22) Anmeldetag: 10.08.1999
(51) Int. Cl.: G01N 27/419, G01N 27/406, H02M 3/335

(54) **SCHALTUNGSANORDNUNG ZUM GENERIEREN EINER VIRTUELLEN MASSE ALS GEMEINSAMES BEZUGSPOTENTIAL FÜR EINE ABGASSONDE IN EINEM KRAFTFAHRZEUG**
CIRCUIT FOR GENERATING A VIRTUAL GROUND USED AS A COMMON REFERENCE POTENTIAL FOR AN EXHAUST PROBE IN A MOTOR VEHICLE
CIRCUIT POUR GENERER UNE MASSE VIRTUELLE SOUS FORME DE POTENTIEL DE REFERENCE COMMUN POUR UNE SONDE POUR GAZ D'ECHAPPEMENT DANS UN VEHICULE AUTOMOBILE

(30) Priorität: 10.08.1998 DE 19836129
(43) Veröffentlichungstag der Anmeldung: 06.06.2001
(73) Patentinhaber: SIEMENS AKTIENGESELLSCHAFT, 80333 München (DE)
(72) Erfinder: AMTMANN, Markus, D-93057 Regensburg (DE); BOLZ, Stephan, D-93102 Pfatter (DE); RÖSSLER, Jürgen, D-97702 Münnerstadt (DE)
(86) Internationale Anmeldenummer: PCT/DE1999/002496
(87) Internationale Veröffentlichungsnummer: WO 2000/010003

(56) Entgegenhaltungen:
- EP-A- 0 849 590
- DE-A- 4 035 132
- US-A- 4 803 866
- US-A- 5 272 614
- P. HOROWITZ AND W. HILL: "THE ART OF ELECTRONICS" 1989 , CAMBRIDGE UNIVERSITY PRESS , CAMBRIDGE XP002128341 PAGES 355-377 Seite 355 -Seite 357 Seite 360 Seite 376 -Seite 377
- Boudreaux R.R. et al: 'DIGITAL CONTROL OF A BUCK CONVERTER USING AN 8-BIT MICROCONTROLLER', TECHNICAL PAPERS OF THE TENTH INTERNATIONAL HIGH FREQUENCY POWER CONVERSION 1995 CONFERENCE, MAY 6-12, 1995, SAN JOSE, CALIFORNIA, PAGES 238-251, ISBN 0-931033-54-3

## Beschreibung

Die Erfindung betrifft eine Schaltungsanordnung zum Generieren einer virtuellen Masse als gemeinsames Bezugspotential für eine Abgassonde in einem Kraftfahrzeug.

Im Zuge eines steigenden Umweltbewußtseins und daraus resultierender, immer strengerer Abgasverordnungen erlangt die Schadstoffverringerung in Abgasen von Brennkraftmaschinen in Kraftfahrzeugen eine immer größere Bedeutung. Für die Einhaltung der heute gültigen Emissionsgrenzwerte für Schadstoffe, wie Kohlenmonoxid (CO), Stickoxide (NOₓ) und Kohlenwasserstoffe (HC) ist einerseits eine gezielte Motorsteuerung und andererseits eine katalytische Nachbehandlung der Abgase notwendig. Für beide Maßnahmen werden Meßwerte von Abgassonden - z.B. Lambdasonden oder NOₓ-Sonden - benötigt.

Zur Messung der Schadstoffkonzentration im Abgas einer Brennkraftmaschine ist es bekannt, Dickschicht-Sensoren zu verwenden. Ein solcher Sensor ist am Beispiel eines NOₓ-Sensors in der Druckschrift N. Kato et al., "Performance of Thick Film NOₓ-Sensor on Diesel and Gasoline Engines", Society of Automotive Engineers, Veröffentlichung 970858, 1997, beschrieben. Dieser NOₓ-Sensor weist zwei Meßzellen und drei Sauerstoffpumpzellen auf und verwirklicht folgendes Meßkonzept: In einer ersten Meßzelle, der das zu messende Gas über eine Diffusionsbarriere zugeführt wird, wird mittels eines ersten Sauerstoff-Ionen-Pumpstroms eine erste Sauerstoffkonzentration eingestellt, wobei keine Zersetzung von NOₓ stattfindet. In einer zweiten Meßzelle, die über eine Diffusionsbarriere mit der ersten Meßzelle verbunden ist, wird der Sauerstoffgehalt mittels eines zweiten Sauerstoff-Ionen-Pumpstroms weiter abgesenkt und NOₓ an einer Meßelektrode zersetzt. Der so erzeugte Sauerstoff wird als Maß für die NOₓ-Konzentration erfaßt. Der gesamte NOₓ-Sensor wird dabei mittels eines elektrischen Heizelements auf eine erhöhte Temperatur, z. B. 700°C, gebracht.

Zum Betrieb eines derartigen Sensors ist es notwendig, den jeweiligen Pumpstrom für die Sauerstoffpumpzellen exakt zu regeln. Da Kraftfahrzeuge in der Regel eine unsymmetrische Versorgungsspannung aufweisen, erfordert die Generierung sowohl von positiven als auch von negativen Pumpströmen ein Bezugspotential in der Mitte des Versorgungsspannungsbereiches.

Aus der Druckschrift US 5 272 614 ist ein mikroprozessorgesteuerter Gleichspannungswandler bekannt, bei dem die Ausgangsspannung des Wandlers durch den Mikroprozessor eingelesen und mit einem Sollwert verglichen wird. Abhängig von der Abweichung wir ein pulsweitenmoduliertes Signal erzeugt, das als Steuersignal für einen steuerbaren Schalter des Wandlers dient.

Der Erfindung liegt das technische Problem zugrunde, eine Schaltungsanordnung zu entwickeln, durch die eine virtuelle Masse als gemeinsames Bezugspotential generiert werden kann.

Die Aufgabe wird durch die Merkmale des Patentanspruchs 1 gelöst. Vorteilhafte Weiterbildungen der Erfindung sind in den Unteransprüchen niedergelegt.

Zum Generieren der virtuellen Masse wird ein Mikrocontroller in Verbindung mit einer analogen Beschaltung verwendet. Der aktuelle Potentialwert der virtuellen Masse wird mit Hilfe von A/D-Wandlern im Mikrocontroller eingelesen und mit einem vorgegebenen Sollwert verglichen. Aufgrund des sich ergebenden Differenzwertes wird das Potential der virtuellen Masse auf einen Wert in der Mitte des Versorgungsspannungsbereiches geregelt, so daß sowohl positive als auch negative Pumpströme erzeugt werden können. Der Meßfehler der gesamten Schaltungsanordnung wird somit auf die durch Leckströme und Quantisierungsfehler verursachten Fehler der A/D-Wandlung reduziert.

Ein Ausführungsbeispiel der Erfindung wird im folgenden für einen NOₓ-Sensor anhand der Figuren erläutert. Es zeigen:
- Figur 1: eine schematische Schnittdarstellung eines NO_{X}-Sensors und
- Figur 2: ein Blockschaltbild der erfindungsgemäßen Schaltungsanordnung zum Generieren einer virtuellen Masse.

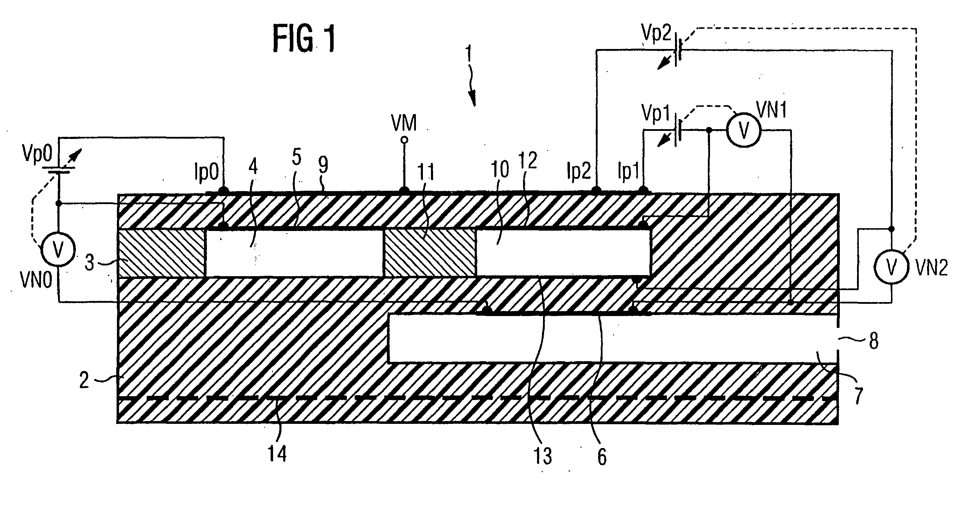

In Figur 1 ist ein Schnitt durch einen NOₓ-Sensor 1 schematisch dargestellt. Der aus einem Festkörperelektrolyten 2, in diesem Fall Zirkondioxid, bestehende NOₓ-Sensor 1 nimmt über eine erste Diffusionsbarriere 3 das zu messende Abgas auf. Das Abgas diffundiert durch die Diffusionsbarriere 3 in eine erste Meßzelle 4. Der Sauerstoffgehalt in dieser Meßzelle wird mittels einer ersten Nernstspannung VN0 zwischen einer ersten Pumpelektrode 5 und einer Umgebungsluft ausgesetzten Referenzelektrode 6 gemessen. Dabei ist die Referenzelektrode 6 in einem Luftkanal 7 angeordnet, in den über eine Öffnung 8 Umgebungsluft gelangt. Beide Elektroden 5, 6 sind herkömmliche Platinelektroden.

Im herkömmlichen Verfahren wird der Meßwert der ersten Nernstspannung VN0 dazu verwendet, eine erste Stellspannung Vp0 einzustellen. Die Stellspannung Vp0 treibt einen ersten Sauerstoff-Ionen-Pumpstrom Ip0 durch den Festkörperelektrolyten 2 des NOₓ-Sensors 1 zwischen der ersten Pumpelektrode 5 und einer Außenelektrode 9, deren Potential auf einer als gemeinsames Bezugspotential dienenden virtuellen Masse VM liegt - die Pumpelektrode 5 und die Außenelektrode 9 bilden eine erste Pumpzelle. Dabei wird die Stellspannung Vp0 von einem Regler so eingestellt, daß in der ersten Meßzelle 4 eine vorbestimmte Sauerstoffkonzentration vorliegt.

Die erste Meßzelle 4 ist mit einer zweiten Meßzelle 10 über eine zweite Diffusionsbarriere 11 verbunden. Durch diese Diffusionsbarriere 11 diffundiert das in der Meßzelle 4 vorhandene Gas in die zweite Meßzelle 10. Die zweite Sauerstoffkonzentration in der zweiten Meßzelle 10 wird über eine zweite Nernstspannung VN1 zwischen einer zweiten Pumpelektrode 12, die ebenfalls eine Platinelektrode ist, und der Referenzelektrode 6 gemessen und von einem Regler zur Vorgabe einer zweiten Stellspannung Vp1 verwendet, die einen zweiten Sauerstoff-Ionen-Pumpstrom Ipl treibt. Der zweite Sauerstoff-Ionen-Pumpstrom Ipl aus der zweiten Meßzelle 10 fließt von der zweiten Pumpelektrode 12 durch den Festkörperelektrolyten 2 zur Außenelektrode 9 (zweite Pumpzelle). Mit seiner Hilfe wird in der zweiten Meßzelle 10 eine vorbestimmte Sauerstoffkonzentration eingestellt.

Die von den bisherigen Vorgängen in den Meßzellen 4 und 10 nicht betroffene NOₓ-Konzentration wird nun an einer Meßelektrode 13, die katalytisch wirksam ausgestaltet ist, bestimmt. Dazu wird eine dritte Sauerstoffkonzentration über eine dritte Nernstspannung VN2 zwischen der Meßelektrode 13 und der Referenzelektrode 6 gemessen und von einem Regler zur Vorgabe einer dritten Stellspannung Vp2 verwendet. Unter Anlegen dieser Stellspannung Vp2 zwischen der Meßelektrode 13 und der Außenelektrode 9 (dritte Pumpzelle) wird das NOₓ zersetzt und der freigewordene Sauerstoff wird durch den Festkörperelektrolyten 2 in einem dritten Sauerstoff-Ionen-Pumpstrom Ip2 zur Außenelektrode 9 hin gepumpt. Der dritte Sauerstoff-Ionen-Pumpstrom Ip2 wird bei ausreichend geringem Restsauerstoffgehalt in der Meßzelle 10 nur von Sauerstoffionen getragen, die aus der Zersetzung von NOₓ stammen. Er ist somit ein Maß für die NOₓ-Konzentration in der Meßzelle 10 und somit im zu messenden Abgas. Da derartige NOₓ-Sensoren eine starke Temperaturabhängigkeit aufweisen, sorgt ein Heizelement 14 dafür, daß die Sondentemperatur zur Einhaltung der notwendigen Meßgenaugkeit stets in einem vorgegebenen Temperaturbereich gehalten wird.

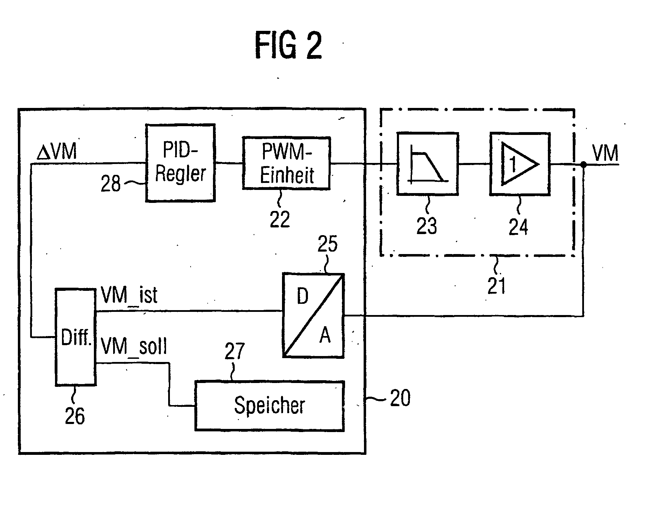

Zum Generieren einer virtuellen Masse als gemeinsames Bezugspotential in der Mitte des Versorgungsspannungsbereichs wird ein Mikrocontroller 20 in Verbindung mit einer analogen Beschaltung 21 verwendet. Die Schaltungsanordnung ist in Figur 2 detailliert dargestellt. Ein in einer PWM-Einheit 22 innerhalb des Mikrocontrollers 20 erzeugtes pulsweitenmoduliertes Signal wird mit einer analogen Filterschaltung 23 in ein Gleichspannungssignal umgewandelt. Um eine ausreichend niedrige Ausgangsimpedanz zu erreichen, ist ein Impedanzwandler 24, z. B. in Form eines Komplementär-Emitterfolgers oder eines als Bufferverstärker geschalteten Operationsverstärkers nachgeschaltet. Das Ausgangspotential des Impedanzwandlers 24 wird von einem A/D-Wandler 25 im Mikrocontroller 20 eingelesen und als Istwert der virtuellen Masse VM_ist an einen Differenzbildner 26 ausgegeben. Der Differenzbildner 26 ermittelt aus dem Istwert VM_ist und einem Sollwert VM_soll der virtuellen Masse einen Differenenzwert ΔVM. Der Sollwert wird dabei aus einem Festwertspeicher 27 ausgelesen, der vorzugsweise in den Mikrocontroller 20 integriert ist. Wird ein programmierbarer Festwertspeicher, beispielsweise ein EPROM verwendet, so ist ein Ausgleich eventuell auftretender Asymmetrien oder eine Nachkalibrierung während der Lebensdauer des Sensors möglich. Der Differenzwert ΔVM wird einem Regler 28, z. B. einem PID-Regler, innerhalb des Mikrocontrollers 20 zugeführt, der die PWM-Einheit 22 steuert.

Durch den Einsatz eines Mikrocontrollers mit integrierten A/D-Wandlern lassen sich Spannungspotentiale innerhalb der Schaltungsanordnung einlesen und beliebig durch Differenzbildung weiterverarbeiten. Auf diese Weise kann auf eine zusätzliche analoge Differenzbildung mit den entsprechenden Toleranzfehlern verzichtet werden. Im Vergleich mit einer rein analogen Schaltungsanordnung erlaubt es die Kombination eines Mikrocontrollers mit einer analogen Beschaltung somit, den Gesamtfehler der Schaltung auf die Fehler der A/D-Wandlung, also Quantisierungsfehler und auftretende Leckströme, zu reduzieren.

Die Erfindung wurde beispielhaft für einen NOₓ-Sensor beschrieben, es sei aber darauf hingewiesen, daß entsprechende Schaltungsanordnungen auch für andere nach dem Prinzip der galvanischen Sauerstoffkonzentrationszelle mit Festelektrolyt arbeitenden Abgassonden, z.B. lineare Sauerstoffsonden, geeignet sind.

## Patentansprüche

1. Schaltungsanordnung zum Generieren einer virtuellen Masse (VM) für eine nach dem Prinzip der galvanischen Sauerstoffkonzentrationszelle mit Festelektrolyt arbeitenden Abgassonde, die aufweist
- einen Microcontroller (20),
• durch den der Istwert der virtuellen Masse (VM_ist) bestimmt wird,
• durch den ein pulsweitenmoduliertes Signal erzeugt wird,
- einen Festwertspeicher (27), aus dem ein Sollwert der virtuellen Masse (VM_soll) ausgelesen wird.
- eine analoge Beschaltung (21), durch die das pulsweitenmodulierte Signal in eine virtuelle Masse (VM) umgesetzt wird, und die aufweist
• eine Filterschaltung (23), durch die das pulsweitenmodulierte Signal in ein Gleichspannungssignal umgewandelt wird, und
• einen Impedanzwandler (24), durch den die Ausgangsimpedanz des Microcontrollers angepaßt wird.

2. Schaltungsanordnung nach Anspruch 1, **dadurch gekennzeichnet, daß** der Festwertspeicher (27) programmierbar ist.

3. Schaltungsanordnung nach einem der Ansprüche 1 oder 2, **dadurch gekennzeichnet, daß** der Festwertspeicher (27) in den Mikrocontroller (20) integriert ist.

4. Schaltungsanordnung nach einem der vorhergehenden Ansprüche, **dadurch gekennzeichnet, daß** der Mikrocontroller (20) aufweist
- einen Differenzbildner (26), durch den aus dem Istwert der virtuellen Masse (VM_ist) und dem Sollwert der virtuellen Masse (VM_soll) ein Differenzwert (ΔVM) gebildet wird,
- eine PWM-Einheit (22), durch die ein pulsweitenmoduliertes Signal erzeugt wird, und
- einen Regler (28), durch den die PWM-Einheit (22) aufgrund des Differenzwertes (ΔVM) gesteuert wird.

## Claims

1. Circuit array for generating a virtual ground (VM) for an exhaust probe which operates according to the principle of the galvanic oxygen concentration cell with solid electrolyte and which has
- a micro-controller (20),
• by means of which the actual value of the virtual ground (VM_act) is determined,
• by means of which a pulse-width-modulated signal is generated,
- a ROM (27) from which a setpoint value of the virtual ground (VM_setp) is read out,
- an analogue circuit (21) by means of which the pulse-width-modulated signal is converted into a virtual ground (VM), and which has a filter circuit (23) by means of which the pulse-width-modulated signal is converted into a DC voltage signal and an impedance converter (24) by means of which the output impedance of the micro-controller is adapted.

2. Circuit array according to Claim 1, **characterized in that** the ROM (27) is programmable.

3. Circuit array according to one of Claims 1 or 2, **characterized in that** the ROM (27) is integrated into the micro-controller (20).

4. Circuit array according to one of the preceding claims, **characterized in that** the micro-controller (20) has
- a difference former (26) by means of which a difference value (ΔVM) is formed from the actual value of the virtual ground (VM_act) and the setpoint value of the virtual ground (VM_setp),
- a PWM unit (22) by means of which a pulse-width-modulated signal is generated, and
- a controller (28) by means of which the PWM unit (22) is controlled on the basis of the difference value (ΔVM).

## Revendications

1. Agencement de circuit pour générer une masse virtuelle (VM) pour une sonde de gaz d'échappement travaillant selon le principe de la cellule galvanique de concentration d'oxygène avec électrolyte solide, qui présente
- un microcontrôleur (20),
• par lequel la valeur réelle de la masse virtuelle (VM_réelle) est déterminée,
• par lequel un signal modulé au niveau de la largeur d'impulsion est généré,
- une mémoire de valeur fixe (27) de laquelle on extrait une valeur de consigne de la masse virtuelle (VM_prévue),
- un câblage (21) analogique, par lequel le signal modulé au niveau de la largeur d'impulsion est converti en une masse virtuelle (VM), et qui présente
• un circuit filtre (23), par lequel le signal modulé au niveau de la largeur d'impulsion est converti en un signal de tension continu, et
• un convertisseur d'impédance (24), par lequel l'impédance de sortie du microcontrôleur est adaptée.

2. Agencement de circuit selon la revendication 1, **caractérisé en ce que** la mémoire de valeur fixe (27) est programmable.

3. Agencement de circuit selon l'une quelconque des revendications 1 ou 2, **caractérisé en ce que** la mémoire de valeur fixe (27) est intégrée dans le microcontrôleur (20).

4. Agencement de circuit selon l'une quelconque des revendications précédentes, **caractérisé en ce que** le microcontrôleur (20) présente
- un soustracteur (26), par lequel une valeur de différence ΔVM est formée à partir de la valeur réelle de la masse virtuelle (VM_réelle) et de la valeur de consigne de la masse virtuelle (VM_prévue),
- une unité de modulation d'impulsions en largeur (22), par laquelle un signal modulé au niveau de la largeur d'impulsion est généré, et
- un régulateur (28), par lequel l'unité de modulation d'impulsions en largeur (22) est commandée sur la base de la valeur de différence (ΔVM).
